# EUROPÄISCHE PATENTSCHRIFT

(11) **EP 0 378 649 B1**
(45) Veröffentlichungstag und Bekanntmachung des Hinweises auf die Patenterteilung: **08.03.1995**
(21) Anmeldenummer: 89907716.8
(22) Anmeldetag: 29.06.1989
(51) Int. Cl.: G05B 19/409

(54) **VORRICHTUNG ZUM EINGEBEN VON STEUERDATEN IN EINE CNC-WERKZEUGMASCHINE**
DEVICE FOR INPUTTING CONTROL DATA IN A CNC MACHINE-TOOL
DISPOSITIF POUR INTRODUIRE DES DONNEES DE COMMANDE DANS UNE MACHINE-OUTIL CNC

(30) Priorität: 30.06.1988 DE 3822101
(43) Veröffentlichungstag der Anmeldung: 25.07.1990
(73) Patentinhaber: TRAUB Aktiengesellschaft, 73262 Reichenbach (DE)
(72) Erfinder: KLAUSS, Walter, D-7321 Adelberg (DE); MICHL, Hans-Jürgen, D-7311 Notzingen (DE); MONZ, Joachim, D-7333 Ebersbach-Weiler (DE)
(74) Vertreter: von Hellfeld, Axel, Dr. Dipl.-Phys.
(86) Internationale Anmeldenummer: EP8900744
(87) Internationale Veröffentlichungsnummer: WO9000273

(56) Entgegenhaltungen:
- EP-A- 120 969
- EP-A- 2 840 57
- WO-A-88/06313
- DE-A- 3 403 440
- IBM TECHNICAL DISCLOSURE BULLETIN.vol.28,no.2,Juli 1985,NEW YORK US Seiten 820-822;
- RESEARCH DISCLOSURE.no.267,Juli 1986,HAVANT GB Seite 383

## Beschreibung

Die Erfindung betrifft eine Vorrichtung zum Eingeben von Steuerdaten in eine CNC-Werkzeugmaschine wie sie im EP-A-120 960 beschrieben ist, mit einem Bildschirm, auf dem Daten angezeigt werden, und mit einer Eingabeeinrichtung, mit welcher eine Bedienungsperson Daten einschließlich Befehle eingeben kann, um programmierte Maschinenfunktionen auszuwählen und zu steuern.

CNC-Werkzeugmaschinen sind rechnergestützt numerisch gesteuerte Maschinen zur spanenden Bearbeitung von Werkstücken, insbesondere aus Metall.

Die erfindungsgemäß vorgesehene Eingabeeinrichtung bildet den Teil eines Bedienungspultes einer CNC-Werkzeugmaschine, in welche eine Datenverarbeitungsanlage integriert ist. Das Bedienungspult dient zum Steuern der Werkzeugmaschine mittels der Datenverarbeitungsanlage, wobei die Bedienungsperson Daten, insbesondere Befehle über das Bedienungspult in die Datenverarbeitungsanlage eingibt, um gemäß dort vorab abgelegten Programmen dem Werkstück und dem herzustellenden Artikel optimal angepaßte Steuerungen der Werkzeugmaschine abzurufen und automatisch ablaufen zu lassen, oder einfache Programmierungen vorzunehmen.

Aus dem europäischen Patent 44 192 sowie der europäischen Patentanmeldung 87 115 015.7 sind derartige Verfahren zum Steuern einer CNC-Werkzeugmaschine bekannt. Da die Bedienungsperson über ein Bedienungspult mit der die Werkzeugmaschine steuernden Datenverarbeitungsanlage zusammenwirkt, werden derartige Steuerungen auch "interaktiv" genannt. Gegenüber herkömmlichen Einrichtungen zum Steuern einer CNC-Werkzeugmaschine haben solche interaktiven Steuerungen den Vorteil, daß die Bedienungsperson keine detaillierte Codierung des Programms für den herzustellenden Artikel vornehmen muß, sondern bezüglich der Form des durch Spanung herzustellenden Artikels symbolisch codierte Daten eingeben kann, welche von der Datenverarbeitungsanlage ausgewertet und in Steuerbefehle für den Betrieb der Werkzeugmaschine umgesetzt werden.

Ein graphisch-interaktives Programmiersystem im vorstehenden Sinne erleichtert die Bedienung einer CNC-Werkzeugmaschine erheblich. Während bei herkömmlichen Anordnungen noch das NC-Programm Satz für Satz und Wort für Wort in einer bestimmten Programmsprache eingegeben werden muß, erübrigt sich dies nunmehr, da der Benutzer mit Hilfe sinnfälliger Symbole und Darstellunggen auf dem Bildschirm einen Dialog mit der Datenverarbeitungsanlage führen kann, die entsprechend den von der Bedienungsperson im Verlaufe des Dialoges aufgrund entsprechender Fragestellungen eingegebenen Daten bzw. Befehlen automatisch vorab abgelegte Programme und Steuerdaten aufruft, um die Werkzeugmaschine vollautomatisch zu betreiben. Daneben kann der Benutzer auch wahlweise einfache Programmierungen durchführen.

Die Erfindung betrifft eine Eingabeeinrichtung, mit der ein derartiger Dialog durchgeführt werden kann. In der Datenverarbeitungstechnik ist es bekannt, zur Unterstützung eines Dialoges zwischen dem Benutzer und der Datenverarbeitungsanlage Zeiger (sogenannter Cursor) zu verwenden. Der Zeiger wird vom Benutzer auf einem ein graphisches Bild darstellenden Bildschirm bewegt und die Stellung, in welche der Zeiger bewegt wird, entspricht Daten oder Befehlen seitens des Benutzers. Die Erfindung benutzt eine derartige Dialogtechnik mittels eines Zeigers (Cursors).

Aus dem europäischen Patent 87 944 ist ein Verfahren bekannt, mit dem graphische Daten in die Datenverarbeitungsanlage einer CNC-Werkzeugmaschine unter Verwendung einer sogenannten Maus oder eines Lichtgriffels eingebbar sind.

Beim gattungsgemäßen Bedienungspult für eine CNC-Werkzeugmaschine ist ein Bildschirm vorgesehen, auf dem die Datenverarbeitungsanlage der Bedienungsperson im Verlauf des Dialogs die erforderlichen Informationen gibt, Fragen stellt und/oder Auswahlmöglichkeiten anbietet. Soll der Dialog seitens des Benutzers unter anderem mittels eines Zeigers geführt werden, so muß eine Eingabeeinrichtung vorgesehen werden, mit welcher der Zeiger auf dem Bildschirm bewegbar ist. Hierfür sind in der Datenverarbeitungstechnik verschiedene Mittel bekannt, insbesondere Tasten, sogenannte Joy-Sticks oder auch sogenannte Touch-Panels (von Hand betätigbare Kontaktfelder), bei denen Daten oder Befehle durch Fingerberührung des Kontaktfeldes angesprochen (aktiviert) werden. Es ist auch bekannt, über einen Bildschirm selbst mittels eines Griffels oder auch des Fingers Daten in einen Rechner einzugeben.

Aus der DE-OS 34 03 440 ist ein sogenanntes Touch Pannel (Kontaktfeld) bekannt. Dort ist die Geschwindigkeit der Verschiebung eines Cursors abhängig von der Größe der Kraft, die auf das Kontaktfeld wirkt. Es sind vier Detektoren jeweils an den Seiten des Kontaktfeldes positioniert. Zwar wächst die Kraft, mit der die Sensoren beaufschlagt werden, mit der Geschwindigkeit der Fingerbewegung, doch ändert sich nicht die Auflösung der Bewegung des Cursors auf dem Bildschirm, d.h. die Inkremente der Bewegung des Cursors sind nicht abhängig von der Geschwindigkeit der Fingerbewegung. Dies erfordert eine im Verhältnis zum Bildschirm relativ große Kontaktfläche.

Der Erfindung liegt die Aufgabe zugrunde, ein Bedienungspult für eine CNC-Werkzeugmaschine der eingangs genannten Art zu schaffen, welches einen einfachen und funktionssicheren Dialog zwischen dem Bediener und der Werkzeugmaschine ermöglicht.

Erfindungsgemäß wird diese Aufgabe dadurch gelöst, daß eine Eingabeeinrichtung zum Bewegen eines Zeigers auf dem Bildschirm des Bedienungspultes ein am Bedienungspult angeordnetes, mittels eines Fingers betätigbares Kontaktfeld (Touch Pannel) aufweist. Dabei ist erfindungsgemäß vorgesehen, daß die Auflösung der Bewegung des Zeigers auf dem Bildschirm abhängig ist von der Geschwindigkeit der Bewegung des Fingers auf dem Kontaktfeld. Dies hat den Vorteil, daß mit einem relativ großen Bildschirm ein relativ kleines Kontaktfeld verwendet werden kann, welches wenig störanfällig ist und übersichtlich in das Bedienungspult integriert werden kann.

Die Erfindung sieht also vor, daß die Auflösung der Bewegung des Cursors auf dem Bildschirm abhängig gemacht wird von der Bewegungsgeschwindigkeit des Fingers auf dem Kontaktfeld, d.h. die Inkremente der Bewegung des Zeigers auf dem Bildschirm werden in Abhängigkeit von der Geschwindigkeit der Fingerbewegung variiert. Fährt der Benutzer sehr schnell mit dem Finger über das Kontaktfeld, so "springt" der Cursor mit relativ großen Schritten über den Bildschirm, während bei einer geringen Bewegungsgeschwindigkeit des Fingers, die Cursor-Schritte relativ klein sind. Dabei weist das erfindungsgemäße Kontaktfeld (Sensorfeld) eine vorgegebene, endliche Auflösung auf.

Erfindungsgemäß ist also die Auflösung des Kontaktfeldes (Sensorfeides) vorgegeben und endlich, während die Auflösung der Bewegung des Zeigers (Cursors) auf dem Bildschirm variable angepaßt wird.

Bevorzugt ist das Kontaktfeld so gestaltet, daß es durch eine Schutzfolie abgedeckt ist und die Sensoren durch diese Folie hindurch beaufschlagt werden.

Die Erfindung ermöglicht somit eine Anwendung des als solches bekannten Prinzips der Dateneingabe mittels eines Kontaktfeldes bei maschinenintegrierten Steuerungen in Fabrikationsanlagen sowie im Werkstattbetrieb. Die Steuerung arbeitet auch unter extremen äußeren Bedingungen (Schmutz, rauher Umgang etc.) funktionssicher.

Diese Funktionssicherheit wird in einer bevorzugten Ausgestaltung der Erfindung dadurch gefördert, daß eine elastische Folie nicht nur das Kontaktfeld überdeckt, sondern integral auch die benachbarten Bedienungselemente, wie Schalter, Tasten und andere Elemente zum Eingeben von Informationen in die Maschinensteuerung.

Der Erfindung liegt die Erkenntnis zugrunde, daß ein durch Fingerberührung betätigbares Kontaktfeld im rauhen Werkstattbetrieb einer CNC-Werkzeugmaschine anderen Mitteln zum Bewegen eines Zeigers (Cursors) überlegen ist. Auch die Verwendung des Zeigers selbst für den Dialog hat sich gegenüber anderen Dialogtechniken als für die Steuerung von CNC-Werkzeugmaschinen besonders geeignet erwiesen.

Bei dem Dialog zwischen dem Benutzer und der DVA wird eine sogenannte Baumstruktur mit sogenannter "top-down"-Technik verwendet, d.h. der Dialog ist so gegliedert, daß der Informationstaustausch zwischen DVA und Benutzer vom allgemeinen zum speziellen geht. Ausgehend von einem sogenannten Hauptmenue sind Verzweigungen vorgesehen, die jeweils durch abhängige Tastenfunktionen angesteuert werden. Im Verlaufe der Entwicklung des Dialoges werden entsprechende "Auswahlfenster" und "Eingabefenster" auf dem Bildschirm sichtbar. In den Fenstern werden die Auswahlmöglichkeiten und/oder Eingabedaten festgelegt. Zur Auswahl eines bestimmten "Zweiges" im baumstrukturierten Dialog bewegt der Benutzer den Zeiger auf dem Bildschirm und entsprechend der eingestellten Position des Zeigers wird eine vorgegebener Zweig innerhalb des Hauptmenues ausgewählt und ein zugehöriges Fenster dargestellt.

Nachfolgend wird ein Ausführungsbeispiel der Erfindung anhand der Zeichnung näher beschrieben. Es zeigt:
- Fig. 1: ein Bedienungspult für eine CNC-Werkzeugmaschine,
- Fig. 2: einen wesentlichen Ausschnitt des Bedienungspultes gemäß Fig. 1,
- Fig. 3: eine Bildschirmaufteilung,
- Fig. 4a und 4b: ein Beispiel für eine Fensterdarstellung,
- Fig. 5: ein Beispiel für eine Gesamt-Bildschirmdarstellung, und
- Fig. 6: einen Schnitt durch eine Eingabevorrichtung.

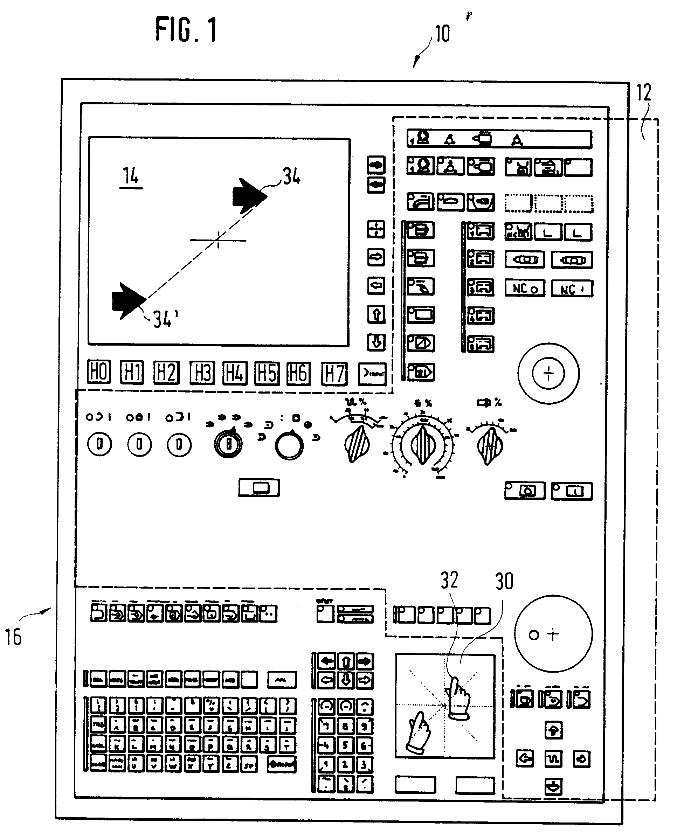

Fig. 1 zeigt ein Ausführungsbeispiel für ein vollständiges Bedienungspult 10 einer CNC-Werkzeugmaschine. Die verschiedenen Betriebszustände der Maschine sowie ein möglicher Handbetrieb werden durch das sogenannte Maschinenbedienfeld 12 ein- und ausgeschaltet. Das Maschinenbedienfeld 12 (also der durch die gestrichelte Linie umrandete Bereich) interessiert im Zusammenhang mit der Erfindung nicht.

Links oben ist im Bedienungspult 10 ein Bildschirm 14 integriert. Auf dem Bildschirm 14 werden Daten farbig dargestellt. Der Bildschirm 14 dient dem Dialog zwischen dem Bediener und der Datenverarbeitungsanlage der Werkzeugmaschine.

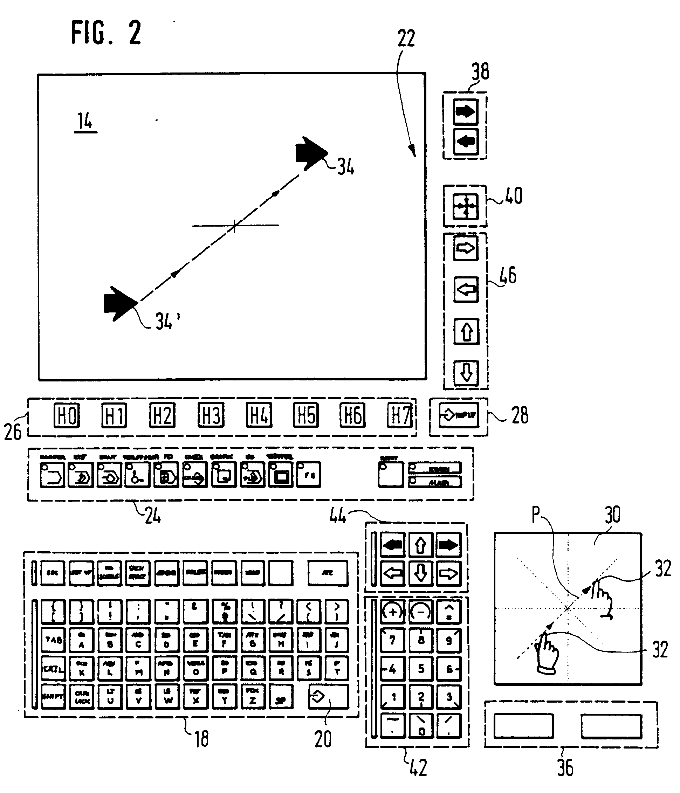

Zunächst sollen die einzelnen Elemente des Bedienungspultes 10 erläutert werden. Hierzu sind in Fig. 2 die zum Maschinenbedienfeld 12 gehörenden Elemente weggelassen und nur die hier in interessierenden dargestellt.

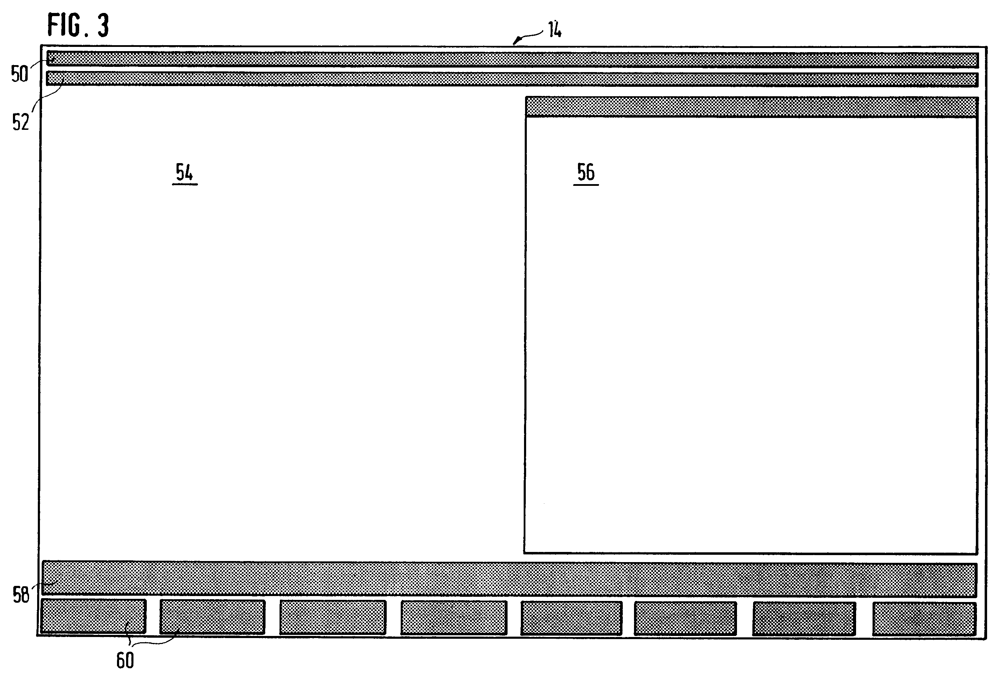

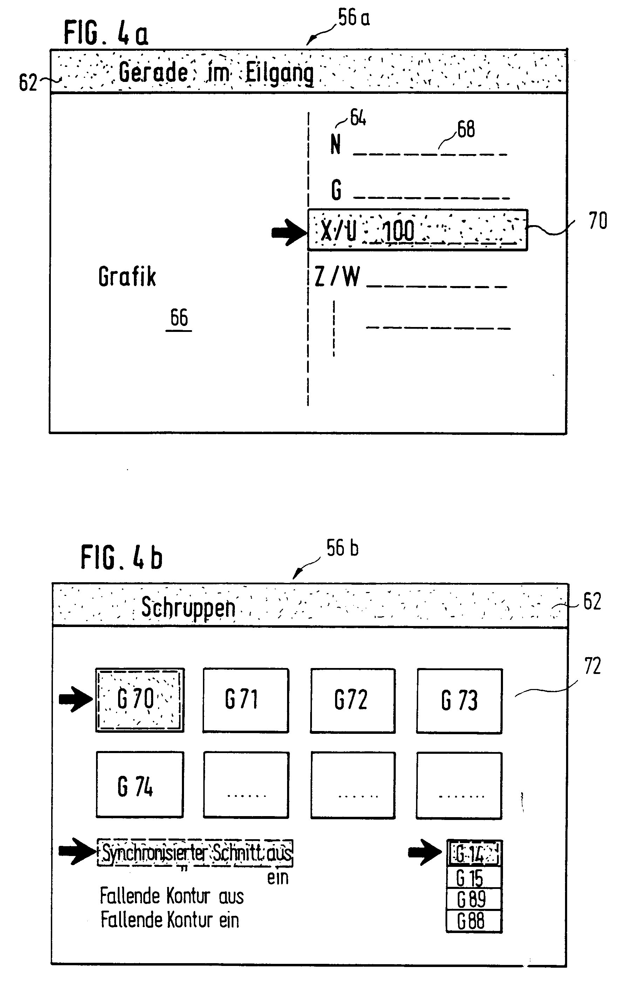

Das Bedienungsfeld 16 für die rechnergestützte numerische Steuerung (NC-Bedienfeld) weist eine Buchstaben-Tastatur 18 mit einer Eingabetaste 20 auf. Mit der Tastatur können Buchstaben sowie Sonderzeichen eingegeben werden. Auch können mit der Tastatur 18 zusätzlich noch bestimmte Eingabefelder 22 innerhalb des Bildschirmes 14 angewählt werden, was weiter unten anhand der Fig. 3 und 4 näher erläutert wird.

Oberhalb der Tastatur 18 ist eine Bildschirm-Betriebsartentastatur 24 angeordnet, mit der ein Wechsel in eine Betriebsart der Maschine und deren Darstellung auf dem Bildschirm aktivierbar ist.

Über der Bildschirm-Betriebsartentastatur 24 ist eine sogenannte Softkey-Tastatur 26 (Berührungstastatur) angeordnet, mit der die einzelnen möglichen Aktionen eingeleitet werden, die auf dem Bildschirm 14 (oberhalb der Bildschirm-Betriebsartentastatur 24) dargestellt werden. Mit einem ausgewählten Softkey wird der Dialog zwischen dem Bediener und der DVA innerhalb eines Hauptmenues gesteuert.

Rechts neben der Softkey-Tastatur 26 ist noch ein Eingabeschalter 28 angeordnet. Dieser Schalter ist parallel zur Eingabetaste 22 geschaltet.

Ein Kontaktfeld 30 ist im Bedienungspult 10 benachbart dem Bildschirm 14 integriert. Das Kontaktfeld ist als solches bekannt, mit ihm können mittels Fingerbewegung auf seiner Oberfläche Ortsinformationen in die DVA eingegeben werden. Erfindungsgemäß dient das Kontaktfeld 30 dazu, einen Zeiger 34 auf dem Bildschirm 14 zu bewegen. Der Bediener steuert so den Zeiger 34 gemäß Fig. 1 und 2 in unterschiedliche Positionen (z.B. von der Position 34′ in die Position 34 gemäß Fig. 2) und führt auf diese Weise zumindest teilweise einen Dialog mit der DVA. Zum Bewegen des Zeigers (Cursors) 34 bewegt der Bediener einen Finger 32 gemäß Fig. 2 in Richtung z.B. des Pfeiles P und der Zeiger 34 folgt auf dem Bildschirm 14 analog. Die Sensorik des Kontaktfeldes 30 ist als solche bekannt (siehe das auf dem Markt angebotene Produkt TOUCH PAD KEYBOAD der Firma "Key-Tronic", Spokane, WA., USA).

Zusätzlich zum Kontaktfeld 30 zum Bewegen des Zeigers 34 sind unterhalb des Kontaktfeldes 30 noch zwei weitere Aktivierungsschalter 36 vorgesehen. Somit haben die Bewegungsschalter 36, die Eingabetaste 20 und der Eingabeschalter 28 gleiche Funktionen und können von der Bedienungsperson wahlweise betätigt werden.

Das Kontaktfeld ist so in das Bedienungspult 10 integriert, daß die Bedienungsperson in bequemer Weise nur unter Zuhilfenahme des Fingers den Dialog führen kann. Die alternativen Mittel zum Bewegen des Zeigers 34 dienen nur als Ersatz für die Fingerbewegung.

Neben der Bewegung des Zeigers 34 können mit Hilfe des Kontaktfeldes 30 auch frei wählbare geometrische Formen auf dem Bildschirm 14 dargestellt werden.

Rechts oben neben dem Bildschirm 14 sind noch zwei Menue-Steuertasten 38 angeordnet, mit denen in einer noch weiter unten zu beschreibenden Funktionszeile ein Balken verschoben werden kann, um andere Funktionen anzuwählen.

Unterhalb der Menue-Steuertasten 38 ist eine Auswahltaste 40 angeordnet, mit der ein bestimmtes Teilprogramm (z.B. "Löschen") ausgewählt werden kann.

Rechts neben der Tastatur 18 ist noch ein graphisch-numerischer Tastenblock 42 zur Eingabe graphischer oder numerischer Daten vorgesehen.

Als Zusatz oder Alternative zum Kontaktfeld 30 (z.B. bei einem Defekt desselben) sind noch zwei Zeiger-Bewegungstastaturen 44, 46 im Bedienungspult 10 angeordnet. Für jede Bewegungsrichtung des Zeigers 34 ist eine eigene Taste vorgesehen, wobei die Bewegungsrichtung durch einen Pfeil auf der Taste angegeben ist. Um einen hohen Bedienungskomfort zu erreichen, sind die Zeiger-Bewegungstastaturen 44, 46 jeweils sowohl im oberen Bereich des Bedienungspultes 10, also benachbart dem Bildschirm 14, als auch im unteren Bereich, also benachbart dem Kontaktfeld 30 angeordnet. Die Betätigung der Zeiger-Bewegungstastaturen 44 bzw. 46 hat also die gleiche Funktion wie die Bewegung eines Fingers 32 auf dem Kontaktfeld 30.

Nachfolgend wird die Aufteilung und Darstellung des Bildschirmes 14 zur Dialogführung anhand der Figuren 3 bis 5 näher beschrieben.

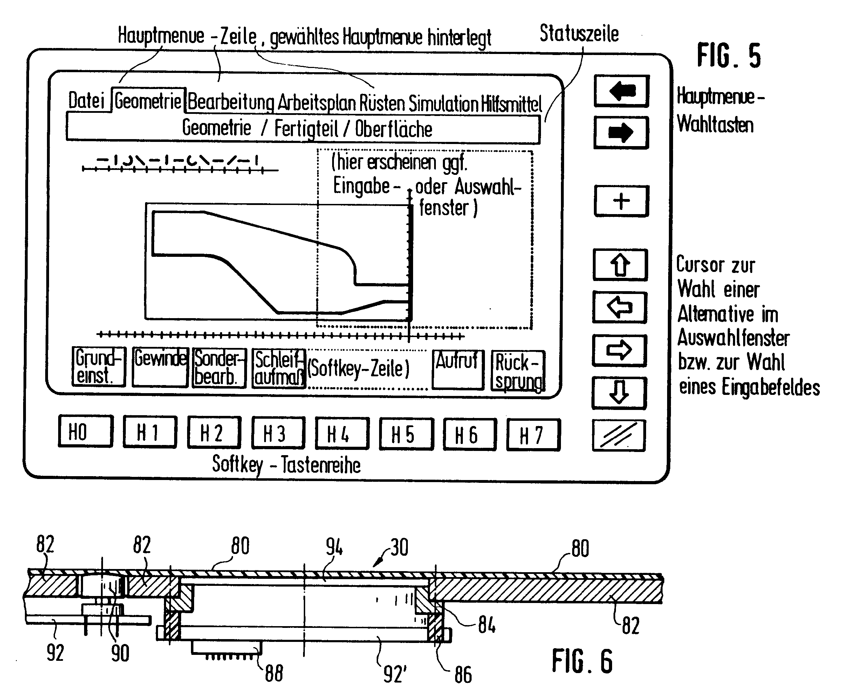

Gemäß Fig. 3 weist der Bildschirm 14 folgende Grobeinteilung auf: Eine Funktionszeile 50 kennzeichnet das sogenannte Hauptmenue. Hier werden alle zur Verfügung stehenden Funktionen angezeigt. Die gerade aktivierte Funktion ist beispielsweise andersfarbig dargestellt (siehe Fig. 5, wo die Funktion "Geometrie" angewählt ist). Bei einer CNC-Drehmaschine können diese Funktionen beispielsweise die Fertig-Rohteilmaße eines Werkstückes sein.

Unter der Funktionszeile 50 ist eine Statuszeile 52 angeordnet, in der sich die vom allgemeinen zum speziellen gehende Dialog-Hierarchie wiederspiegelt. Die Darstellung auf dem Bildschirm 14 hat also eine sogenannte Top-Down-Baumstruktur. Wenn beispielsweise in der Funktionszeile 50 als Hauptmenue "Geometrie" gewählt wurde (siehe Fig. 5), dann folgen in der Statuszeile 52 die Werkstückeigenschaften, Rohteilgeometrie, Fertigteilgeometrie, Material etc.

Die linke Hälfte des Hauptfeldes des Bildschirmes 14 wird von einem Informationsbereich 54 eingenommen. Im Informationsbereich 54 werden die Eingaben sichtbar gemacht. Dies geschieht entweder alfanumerisch oder graphisch mittels Piktogrammen. Dieser Bereich stellt das sogenannte Hauptbild dar, welches gemäß Fig. 5 auch die gesamte Bildschirmfläche einnehmen kann. Neben dem Informationsbereich 54 ist ein Fensterbereich 56 gemäß Fig. 3 vorgesehen. Der Fensterbereich 56 wird nur in bestimmten Dialogsituationen aktiviert, beispielsweise, um dem Bediener bestimmte Alternativen anzugeben (dies wird in der Datenverarbeitungstechnik auch als sogenanntes "Fensteraufmachen" bezeichnet). Ein derart geöffnetes Fenster hat drei mögliche Funktionen: Es kann als Eingabefenster gemäß Fig. 4a dienen; es kann als Auswahlfenster gemäß Fig. 4b dienen oder es kann auch als Darstellung eines Ausschnittes eines anderen Hauptfeldes dienen (siehe Fig. 5).

Das Fenster 56 kann durch eine der Zeiger-Bewegungstastaturen 44, 46 angewählt werden. Bevorzugt wird aber auch hierzu das Kontaktfeld 30 verwendet.

Die Größe des Fensterbereiches 56 ist variabel, es kann die nicht gerade aktivierte Bildschirmseite (in den Figuren die rechte Seite) belegen oder auch die gesamte Bildbreite des Bildschirmes 14 einnehmen, wobei es in der Höhe durch die Statuszeile 52 und den Fehlerbereich 58 begrenzt ist.

Im Fehlerbereich 58 werden Bedienungsfehler in Klarschrift dargestellt.

Unter dem als Zeile geformten Fehlerbereich 58 sind Softkey-Tasten in einer Softkey-Leiste 60 angeordnet. Mit der Softkey-Tastatur 26 ausgewählte Funktionen werden in der Softkeyleiste 60 dargestellt.

Fig. 4a zeigt ein spezielles Eingabefenster 56a innerhalb des Fensterbereiches 56. Zur Erläuterung des jeweils erzeugten Eingabebefehls ist das NC-Satzformat in Klartextform 62 ("Gerade im Eilgang") dargestellt. In dem dargestellten Beispiel soll der Werkzeugträgerschlitten mit maximal möglicher Geschwindigkeit zu einem gewünschten Zielpunkt gefahren werden. Diese Anweisung ist durch Zusatzbedingungen in Form von Buchstaben 64 näher gekennzeichnet, welche die entsprechenden Wortadressen bilden. In einem Graphikbereich 66 wird der gesamte Vorgang durch Piktogramme sinnfällig dargestellt. Zu jeder Wortadresse 64 ist ein Eingabefeld 68 vorgesehen. Die Anwahl eines entsprechenden Eingabefeldes kann ebenso durch das Kontaktfeld 30 erfolgen wie durch die Zeiger-Bewegungstastaturen 44, 46. Die Kennzeichnung einer gewünschten Eingabe erfolgt mittels eines farbigen Balkens 70. In den dargestellten Beispielen ist die Eingabe (100) des Zielpunktes in der X-Achse angewählt worden (U: vom Start- zum Zielpunkt auf der X-Achse).

Im Auswahlfenster 56b (Fig. 4b) werden beispielsweise Schruppzyklen 72 aufgereiht, aus denen dann z.B. ein Zyklus G70 ausgewählt werden kann. Die zugehörigen Zusatzbedingungen sind im unteren Teil des Bildes dargestellt (G14-G18).

Die Auswahl der Bearbeitungsart erfolgt ebenso bevorzugt mittels des Kontaktfeldes 30.

Wie oben erläutert, hat der Fensterbereich 56 noch eine dritte Funktion, nämlich den Ausschnitt eines Hauptbildes darzustellen.

Hauptbilder werden deshalb ausschnittsweise dargestellt, weil kein Hauptbild gut lesbar in den Fensterbereich 56 paßt. Für jedes Hauptbild werden deshalb kleinere Funktionsgruppen definiert, d.h. Teile einer Bildschirmdarstellung werden sinnvoll zusammengefaßt und benannt. Diese Benennungen tauchen dann im Fensterbereich 56 in Form einer Liste auf, nachdem vom Bediener das Hauptbild eingegeben wurde. In dieser Liste wird dann der gewünschte Begriff angewählt und aktiviert (mittels des Zeigers 34), worauf im Fensterbereich 56 dieser Teilausschnitt erscheint.

Im Fensterbereich 56 kann ferner ein vollständiges, also verkleinertes Hauptbild dargestellt werden, über dem ein Rahmen verschoben wird (siehe Fig. 5). Auch dieses Verschieben des Rahmens kann mittels des Kontaktfeldes 30 bzw. der Bewegungstastaturen 44, 46 erfolgen. Ist der gewünschte Bildausschnitt mittels des Rahmens lokalisiert, erfolgt eine Vergrößerung und entsprechende Darstellung auf dem Bildschirm 14. Die Anwahl eines Zusatzbildes erfolgt durch Drücken der Auswahltaste 40. Alle Hauptbilder-Bezeichnungen werden dann in dem Fensterbereich 56 aufgelistet, auf denen dann mittels des Zeigers 34 der gewünschte Bildbegriff ausgewählt werden kann.

Fig. 6 zeigt einen Schnitt durch eine Eingabeeinrichtung einschließlich des Kontaktfeldes 30.

Eine elastische Folie 80 aus gegen Feuchtigkeit und Schmutz schützendem, elastischem Material überdeckt sowohl das Kontaktfeld 30 als auch alle benachbarten Bedienungselemente. Die Folie 80 ist durchgehend, sie weist keine Lücken, Ausnehmungen oder dergleichen auf, durch welche Schmutz, Feuchtigkeit oder dergleichen zu den unter der Folie liegenden Bedienungselementen dringen kann. Auf der Folie sind an den zugeordneten Orten Symbole aufgedruckt, die den darunter liegenden Bedienungselementen, also z.B. den Tastern, Schaltern sowie dem Kontaktfeld entsprechen. Bezüglich des Kontaktfeldes sind Richtungspfeile (siehe Fig. 2) aufgedruckt, die dem Benutzer die Bewegungsrichtung des Fingers vorgeben.

Beim in Fig. 6 dargestellten Ausführungsbeispiel wird die Folie 80 von einer festen Platte 82 aus z.B. Aluminium abgestützt. In der Platte 80 sind Ausnehmungen vorgesehen, in welchen die Bedienungselemente, wie das Kontaktfeld 30, die Schalter und Taster angeordnet sind. In Fig. 6 sind nur das Kontaktfeld 30 und ein Schalter 90 gezeigt.

Das Kontaktfeld 30 wird mittels eines Trägers 34 in der Ausnehmung in der festen Platte 82 direkt unter der Folie 80 positioniert. Die eigentlichen Sensoren 94 des Kontaktfeldes 30 liegen also unter der Folie. Drückt der Benutzer die Folie an einer bestimmten Stelle des Kontaktfeldes 30, so sprechen die unmittelbar darunter liegenden Sensoren an und erzeugen ein entsprechendes Signal. Dies ist als solches im Stand der Technik bekannt (siehe oben). Mittels einer elastischen Abstützung 86 wird eine Leiterplatte 92′ unter dem Kontaktfeld befestigt. Die Leiterplatte 92′ trägt einen Stecker 88.

Unter der Folie 80 ist in einer weiteren Ausnehmung in der Platte 82 ein ebenfalls durch Druck betätigbarer Schalter 90 stellvertretend für die obengenannten Bedienungselemente (Taster etc.) angeordnet, der ebenfalls über eine Leiterplatte 92′ Signale an die Datenverarbeitungsanlage übermittelt.

Beim vorstehend beschriebenen Ausführungsbeispiel ist die Folie 80 elastisch ausgebildet. Es ist auch möglich, die Folie 80 starr auszubilden, da heute hinreichend empfindliche Sensoren zur Verfügung stehen. Zum Beispiel ist es auch möglich, statt einer elastischen Folie 80 eine starre Abdeckung aus Aluminium zu wählen, unter der matrixartig eine Vielzahl von piezoelektrischen Elementen angeordnet sind, welche auf die Platte lokal ausgeübten Druck in ein elektrisches Signal umsetzen.

Fährt der Benutzer mit dem Finger über das Kontaktfeld 30 (gemäß Fig. 6), so liefern die darunter liegenden Sensoren 94 nacheinander elektrische Signale. In einer Ausgestaltung der Erfindung ist vorgesehen, die Auflösung der Eingabeeinrichtung abhängig von der Geschwindigkeit der Fingerbewegung zu gestalten. Die Geschwindigkeit der Fingerbewegung ist meßbar, indem die Zeit gemessen wird, die zwischen der Betätigung benachbart angeordneter Sensoren vergeht. Je schneller der Finger über das Kontaktfeld 30 bewegt wird, umso grober werden die Inkremente der Bewegung des Zeigers gewählt, d.h. bei schneller Fingergeschwindigkeit hat die Eingabeeinrichtung eine grobe Auflösung, während bei langsamer Fingergeschwindigkeit die Inkremente der Bewegung des Zeigers relativ klein gewählt sind, so daß eine hohe Auflösung vorliegt. Mit dieser Einstellung der Auflösung der Eingabeeinrichtung ist es möglich, das Kontaktfeld 30 im Vergleich mit dem Bildschirm relativ klein zu gestalten.

Beim vorstehend beschriebenen Ausführungsbeispiel erfolgte die Betätigung des Kontaktfeldes 30 direkt mittels eines Fingers. Der Begriff "Finger" ist im Sinne der Erfindung sowohl wörtlich als auch verallgemeinernd zu verstehen, d.h. in der einfachsten und bevorzugten Ausgestaltung der Erfindung wird das Kontaktfeld 30 direkt mit dem menschlichen Finger betätigt. Es ist aber auch möglich, einen geeigneten Gegenstand in die Hand zu nehmen, und diesen als "Finger" zu benutzen.

## Patentansprüche

1. Vorrichtung zum Eingeben von Steuerdaten in eine CNC-Werkzeugmaschine mit einem Bildschirm (14), auf dem Daten angezeigt werden, und mit einer Eingabeeinrichtung, mit welcher eine Bedienungsperson Daten einschließlich Befehle eingeben kann, um programmierte Maschinenfunktion auszuwählen und zu steuern,
dadurch **gekennzeichnet**,
daß die Eingabeeinrichtung zum Bewegen eines Zeigers (34) auf dem Bildschirm (14) ein vom Bildschirm getrenntes mittels eines Fingers betätigbares Kontaktfeld (30) aufweist und daß die Auflösung der Bewegung des Zeigers auf dem Bildschirm (14) abhängig von der Geschwindigkeit der Bewegung des Fingers auf dem Kontaktfeld (30) ist, so daß bei schneller Bewegung des Fingers über das Kontaktfeld (30) die Inkremente der Bewegung des Zeigers (34) gröber, und bei langsamer Bewegung des Fingers die Inkremente der Bewegung des Zeigers (34) relativ klein gewählt werden.

2. Vorrichtung nach Anspruch 1,
dadurch **gekennzeichnet**,
daß die Eingabeeinrichtung zum Bewegen des Zeigers (34) zusätzlich von Hand betätigbare Tasten (44, 46) aufweist.

3. Vorrichtung nach Anspruch 2,
dadurch **gekennzeichnet,**
daß sowohl benachbart dem Bildschirm (14) als auch benachbart dem Kontaktfeld (30) von Hand betätigbare Tasten (44, 46) zum Bewegen des Zeigers (34) angeordnet sind.

4. Vorrichtung nach einem der vorhergehenden Ansprüche,
dadurch **gekennzeichnet**,
daß das Kontaktfeld (30) benachbart dem Bildschirm (14) angeordnet ist.

5. Vorrrichtung nach einem der vorhergehenden Ansprüche,
dadurch **gekennzeichnet**,
daß eine Folie (80) vorgesehen ist, welche ganzflächig das Kontaktfeld (30) sowie benachbarte Eingabeeinrichtungen abdeckt.

6. Vorrichtung nach Anspruch 5,
dadurch **gekennzeichnet**,
daß die Folie (80) elastisch ist.

7. Vorrichtung nach einem der vorhergehenden Ansprüche,
dadurch **gekennzeichnet**,
daß die Bewegungsrichtung des Zeigers (34) auf dem Bildschirm (14) zeitlich und örtlich zur Bewegung des Fingers über das Kontaktfeld (30) synchronisiert ist.

## Claims

1. A device for inputting control data into a CNC machine tool, comprising a screen (14) on which data are displayed and an input means by which an operator may enter data, including commands, so as to select and control programmed machine functions, **characterized** in that the input means comprises a finger-operable touch panel (30), separated from the screen, for moving a cursor (34) on the screen (14), and that the resolution of movement of the cursor on the screen (14) depends on the speed of movement of the finger on the touch panel (30) so that the increments of movement of the cursor (34) are selected to be coarser upon rapid movement of the finger across the touch panel (30) and, with slow movement of the finger, the increments of movement of the cursor (34) are selected to be relatively small.

2. The device as claimed in claim 1, characterized in that the input means for moving the cursor (34) additionally comprises manually operable keys (44, 46).

3. The device as claimed in claim 2, characterized in that manually operable keys (44, 46) for moving the cursor (34) are disposed both adjacent the screen (14) and adjacent the touch panel (30).

4. The device as claimed in any one of the preceding claims, characterized in that the touch panel (30) is arrranged adjacent the screen (14).

5. The device as claimed in any one of the preceding claims, characterized in that a foil (80) is provided to cover the whole surface area of the touch panel (30) and adjacent input means.

6. The device as claimed in claim 5, characterized in that the foil (80) is elastic.

7. The device as claimed in any one of the preceding claims, characterized in that the direction of movement of the cursor (34) on the screen (14) is synchronized in time and place with the movement of the finger across the touch panel (30).

## Revendications

1. Dispositif pour introduire des données de commande dans une machine-outil à commande numérique par calculateur, comprenant un écran (14) sur lequel sont affichées des données, ainsi qu'un dispositif d'entrée au moyen duquel un opérateur peut introduire des données, y compris des ordres, afin de sélectionner et de commander des fonctions machine programmées,
caractérisé en ce que le dispositif d'entrée comporte, pour déplacer un pointeur (34) sur l'écran (14), un panneau de contacts (30) séparé de l'écran et pouvant être actionné au moyen d'un doigt, et que la solution du déplacement du pointeur sur l'écran (14) est dépendante de la vitesse de déplacement du doigt sur le panneau de contacts (30), de manière que lors d'un mouvement rapide du doigt sur le panneau de contacts (30), les incréments de déplacement du pointeur (34) soient choisis plus grossiers et, lors d'un mouvement lent du doigt, les incréments de déplacement du pointeur (34) soient choisis relativement petits.

2. Dispositif selon la revendication 1, caractérisé en ce que le dispositif d'entrée comporte en outre des touches (44, 46) pouvant être actionnées manuellement pour déplacer le pointeur (34).

3. Dispositif selon la revendication (2), caractérisé en ce que des touches (44, 46) pouvant être actionnées manuellement pour déplacer le pointeur (34), sont placées à la fois à proximité de l'écran (14) et à proximité du panneau de contacts (30).

4. Dispositif selon une des revendications précédentes, caractérisé en ce que le panneau de contacts (30) est placé près de l'écran (14).

5. Dispositif selon une des revendications précédentes, caractérisé en ce qu'une feuille (80) recouvre toute l'étendue du panneau de contacts (30) ainsi que des dispositifs d'entrée voisins.

6. Dispositif selon la revendication 5, caractérisé en ce que la feuille (80) est élastique.

7. Dispositif selon une des revendications précédentes, caractérisé en ce que la direction de déplacement du pointeur (34) sur l'écran (14) est synchronisée dans le temps et localement avec le déplacement du doigt sur le panneau de contacts (30).
